# EUROPEAN PATENT APPLICATION

(11) **EP 4 768 779 A1**
(43) Date of publication of application: **01.07.2026**
(21) Application number: 25215520.5
(22) Date of filing: 13.11.2025
(51) Int. Cl.: F21V 7/00, F21V 33/00, F21V 8/00, F21V 11/14, F21V 13/12

(54) **DEVICE AND METHOD FOR GENERATING STAR-SPARKLING LIGHTING EFFECT**

(30) Priority: 31.12.2024 CN 202411986881
(71) Applicant: Harman International Industries, Incorporated, Stamford, Connecticut 06901 (US)
(72) Inventor: HUANG, Rongjian, Shenzhen, 518067 (CN)
(74) Representative: Kraus & Lederer PartGmbB

(57) **Abstract**

Provided are a device for generating a star-sparkling lighting effect and a method thereof. The method includes arranging at least one multi-color light source (110) to emit multiple lights (112, 114, 116) of at least two colors, and arranging at least one light-guiding lens (130) in front of the multi-color light source, such that the multiple lights are mixed into mixed-color lights in a diffuse lens portion (150) of the light-guiding lens, and then the mixed-color lights are divergently emitted to a front grille panel (140) via a reflective lens portion (160), and through gaps in the front grille panel, a star-sparkling lighting effect is generated.

## Description

### Technical Field

The inventive subject matter relates to generation of lighting effects, and in particular to a device for generating a star-sparkling lighting effect.

### Background Art

Applying colored lights to speakers, thereby presenting a colorful and dazzling light display as music plays, can bring users a better audio-visual experience. For example, LED lights of various colors can emit lights in colors such as red, green, and blue, so people often use visual effects generated by LED lights to create a colorful living atmosphere.

However, due to the limited number and size of the LEDs, the presented colors may not be rich and brilliant enough, and non-uniform color mixing between hues may even lead to a rough display effect, which easily make viewers feel that the texture is inferior and therefore visually unsatisfactory.

Therefore, it is necessary to provide a solution for generating lighting effects, which can present lighting effects with clearer and more brilliant colors, and can also form a more uniform and soft lighting texture through color mixing, while the product cost is low.

### Summary of the Invention

In order to enable users to enjoy colorful and uniformly mixed high-quality lighting effects while listening to audio, the present disclosure provides a device and method for generating a star-sparkling lighting effect, wherein combined with a multi-color light source provided in a speaker, it can generate a star-sparkling lighting effect with clearer and more brilliant colors and more uniform and softer color mixing, while the product is inexpensive and of good quality.

According to an aspect of the present disclosure, a device for generating a star-sparkling lighting effect is provided. The device for generating a star-sparkling lighting effect may include at least one multi-color light source and at least one light guiding lens. The at least one multi-color light source is arranged to emit multiple lights, wherein the multiple lights may include lights of at least two colors. The at least one light guiding lens is arranged in front of the at least one multi-color light source, and its main body portion is configured as a column to guide the multiple lights through the at least one light guiding lens in a manner of total internal reflection, so that the multiple lights are mixed into mixed-color lights. A front portion of the light guiding lens is configured as a frustum of an enlarged flare shape, so as to divergently emit the mixed-color lights.

According to another aspect of the present disclosure, a method for generating a star-sparkling lighting effect is provided. Steps of the method comprise arranging at least one multi-color light source to emit multiple lights, wherein the multiple lights may include lights of at least two colors. Steps of the method further comprise arranging at least one light guiding lens in front of the at least one multi-color light source, and configuring a main body portion of the at least one light guiding lens as a column to guide the multiple lights through the at least one light guiding lens in a manner of total internal reflection, so that the multiple lights are mixed into mixed-color lights. A front portion of the at least one light guiding lens is configured as a frustum of an enlarged flare shape, so as to divergently emit the mixed-color lights.

Further, the main body portion of the at least one light guiding lens may comprise a diffuse lens portion that is configured to diffuse the multiple lights, so as to uniformly mix the lights into the mixed-color lights. The diffuse lens portion is configured to incorporate a certain amount of diffusion powder into a transparent material inside the diffuse lens portion.

Further, the front portion of the at least one light guiding lens may comprise a reflective lens portion that is fixed in front of the main body portion and fully engaged therewith.

Further, an inner periphery of the reflective lens portion comprises a reflective surface, and the reflective surface is coated with a light reflective coating to reflect the mixed-color lights to a larger range. The reflective surface may comprise light reflective structures, such as tiny curved surface structures, or other regular or irregular concave-convex structures, so as to divergently reflect the mixed-color lights in more directions to a larger range.

Further, the device for generating a star-sparkling lighting effect provided by the present disclosure further comprises a front grille panel, which can replace a front panel of the speaker and be arranged in front of the at least one light guiding lens, so that the reflected mixed-color lights pass through the gaps in the front grille panel to generate a star-sparkling lighting effect.

### Brief Description of the Drawings

These and/or other features, aspects and advantages of the present invention will be better understood upon reading the following detailed description with reference to the accompanying drawings, where the same characters represent the same parts throughout these accompanying drawings, in which:
FIG. 1 shows a schematic structural diagram of a device for generating a star-sparkling lighting effect according to one or more embodiments of the present disclosure; and
FIG. 2 shows a schematic flowchart of a method for generating a star-sparkling lighting effect according to one or more embodiments of the present disclosure.

### Detailed Description of Embodiments

The description of various embodiments is given below for illustrative purposes, but is not intended to be exhaustive or limit the disclosed embodiments. Many modifications and variations will be apparent to those of ordinary skill in the art without departing from the scope and spirit of the described embodiments.

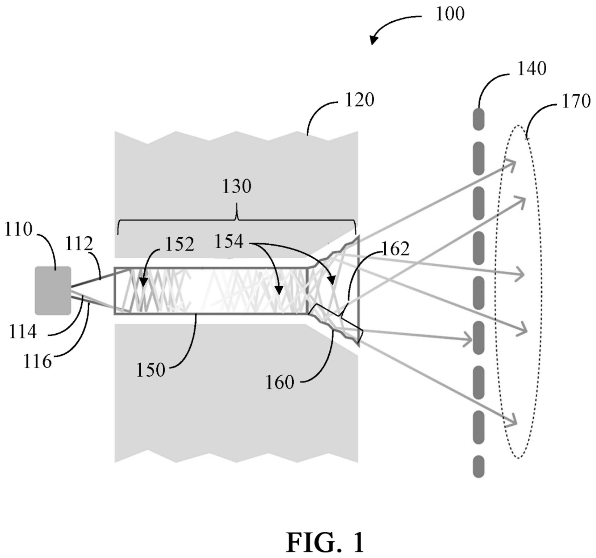

FIG. 1 shows a schematic structural diagram 100 of a device for generating a star-sparkling lighting effect according to one or more embodiments of the present disclosure. FIG. 1 shows an example of an internal space of a portion enclosed by a speaker housing, in which the device for generating a star-sparkling lighting effect provided by the present disclosure is arranged.

The device for generating a star-sparkling lighting effect may include at least one light source. The at least one light source may be a multi-color light source capable of emitting lights of two colors or multiple colors. In some examples, such a multi-color light source may be a light source module composed of multiple single-color LEDs. For example, the multi-color light source may also include, but is not limited to, cool and warm white LEDs, RGB LEDs, and/or RGBW LEDs, or the like. Moreover, the multi-color light source may also be, for example, a monochromatic or polychromatic laser light source, or the like.

The multi-color light source in the present disclosure takes an RGB LED light source 110 as an example, and other multi-color light sources may also be used similarly. For example, RGB LEDs may be placed on a PCB inside the speaker housing and powered by a power supply to emit lights. The RGB LED light source 110 may emit multiple lights. As shown in FIG. 1, the RGB LED light source 110 may emit a red light 112, a green light 114, and/or a blue light 116.

As shown in FIG. 1, the device for generating a star-sparkling lighting effect further includes a star-sparkling lighting member 120. At least one light guiding lens 130 is arranged in the star-sparkling lighting member 120. The at least one light guiding lens 130 may be placed in front of the at least one RGB LED light source 110. In the example shown in FIG. 1, a main body portion of the light guiding lens 130 is configured as an elongated column, such that lights emitted by the RGB LEDs can be guided in the light guiding lens along its length.

The light guiding lens 130 may be configured as a lens of transparent material. The main body portion of the light guiding lens 130 may be a column with smooth side surfaces, which is used to transmit the lights emitted by the RGB LED light source 110 from, for example, the PCB to a front panel of the speaker or other light-emitting locations. For example, the lights emitted by the RGB LED light source 110 may enter from one end of the light guiding lens 130, and may be guided along the elongated column of the light guiding lens 130 in a manner of total internal reflection and emitted from the other end.

The light guiding lens 130 may be made of a material with a refractive index for light that is much greater than a refractive index of its outer cladding, so that the RGB LED light entering the light guiding lens can be retained therein for total internal reflection without escaping the light guiding lens 130, thereby zigzagging along the direction of the length of the column of the light guiding lens 130. The light guiding lens 130 needs to have a good light guiding performance. For example, the light guiding lens 130 may be made of a material such as PC or PMMA to have a good light guiding efficiency. For example, the light guiding lens 130 may also be made of a material such as optical glass, or the like. For example, the light guiding lens 130 may be made of quartz glass to reduce impurities therein, and to improve the structural uniformity inside the light guiding lens 130, and enhance the light guiding effect.

Moreover, the device for generating a star-sparkling lighting effect may further include a front grille panel 140. The front grille panel 140 may be configured to include a plurality of gaps. For example, when the device for generating a star-sparkling lighting effect is used in the speaker, the front grille panel 140 can replace the front panel of the speaker to protect the internal structure of the speaker. The front grille panel 140 of the speaker may be made of a mesh material such as metal, plastic and/or fiberglass. The front grille panel 140 may be configured such that the light within the speaker, which is guided and emitted through the light guiding lens 130 in the star-sparkling lighting member, can further pass through the gaps in the front grille panel 140 and be visible to a user.

When the at least one RGB LED light source 110 arranged in the speaker emits a red light 112, a green light 114 and/or a blue light 116, the lights may be guided through the light guiding lens 130 in a manner of total internal reflection. Since the front grille panel 140 has a structure in which grilles and the gaps therebetween are interwoven, the lights can pass through the gaps in the front grille panel 140 to form a starry lighting effect.

However, for light spots formed by direct color mixing of the lights emitted by the RGB LED light source 110 through guiding, the user may see non-fixed colors at different viewing angles. For example, for a same light spot, the user may see a red light spot from one angle, and a green light spot when the angle is slightly moved, or even see a light spot that is partially red and partially green at the same time. Such a visual effect may be strange and appear crude. In addition, since the grilles on the front grille panel 140 may block some light spots, these light spots cannot pass through the front grille panel and cannot be seen by the user.

Therefore, in one or more embodiments of the present disclosure, the main body portion of the light guiding lens 130 may further include a diffuse lens portion 150. The diffuse lens portion 150 may be configured to diffuse multiple lights incident therein at one end thereof so that the lights are uniformly mixed 152 into mixed-color lights 154 of uniform color. In the example shown in FIG. 1, the red light 112, the green light 114 and/or the blue light 116 emitted by the RGB LED light source 110 may be uniformly mixed 152 into mixed-color light 154 in the diffuse lens portion 150. In one situation, the color-mixed light 154 formed by mixing, via the diffuse lens portion 150, the three colored lights, i.e., the red light 112, the green light 114, and the blue light 116, emitted by the RGB LED light source 110 may be converted into, for example, light that appears white. Moreover, the RGB LED light source 110 may also perform color mixing 152 so as to produce light of other colors. For example, after the red light 112 and the blue light 116 emitted by the RGB LED light source 110 can be mixed to produce, for example, purple light, and so on. Therefore, in terms of color mixing of lights in the light guiding lens, the lights of the multi-color light source may have diverse characteristics.

Additionally or alternatively, in order to make the color mixing of the lights more uniform, a certain amount of diffusion powder (not shown) may be added to the transparent material of the diffuse lens portion 150. The physical entity of the diffusion powder may be, for example, a white fine powder, and during a process of being injection molded into the diffuse lens portion150, the size, shape, distribution, etc. of particles of the diffusion powder may be precisely controlled through advanced production processes. Therefore, after the diffusion powder is processed, the diffusion powder may be then added to the diffuse lens portion150 during the injection molding process. At the same time, the characteristics of the diffusion powder and the diffuse lens portion 150 may be adjusted as needed, and the scattering angle, color of the scattered light, scattering efficiency, etc. of the originally redlight 112, green light 114 and/or blue light 116 from the RGB LED light source may be adjusted to uniformly mix the colors, thereby obtaining an effect of colorful mixed-color lights154, to meet personalized needs of speaker design.

The diffusion powder can cause the light rays scattered under the illumination of lights, that is, it breaks up the lights that originally propagated in a straight line and scatters them in various directions. In one example, the diffusion powder can make the RGB LED lights entering the diffuse lens portion 150 and the mixed-color lights 154 after color mixing have diffusivity and diffusion properties, and the original propagation path of the lights may be changed. Therefore, when the lights pass through the diffuse lens portion 150 containing the diffusion powder, the originally sharp and dazzling light can become soft and pleasant due to multi-angle scattering of the lights, and a point light source can be converted into a surface light source. Those light spots that may be blocked can also be at least partially seen by the user through the gaps in the front grille panel, thereby making the overall lighting effect present a more uniform and aesthetically pleasing light transmission effect, and while ensuring the brightness of the lights, it avoids a potential risk of damaging the user's eyes due to the central area of the LED light being too bright.

As shown in FIG. 1, a front portion of the light guiding lens 130 may be configured such that its cross-sectional diameter gradually increases along the length direction of the light guiding lens, such that the front portion of the light guiding lens 130 presents an enlarged flare shape. Such a design enables the mixed lights that pass through the main body portion of the light guiding lens 130 in a manner of total internal reflection to, after entering this flare-shaped front portion, be emitted divergently from a flare of the front portion, thereby dispersing the uniformly mixed lights to a larger range and obtaining a lighting effect over a larger area.

In one or more embodiments of the present disclosure, the front portion of the light guiding lens 130 may further include a reflective lens portion 160. The reflective lens portion may be formed in front of the main body portion of the light guiding lens 130 (or the diffuse lens portion 150). For example, the reflective lens portion 160 of the light guiding lens 130 may be configured as a cone with a truncated tip. More specifically, the reflective lens portion 160 of the light guiding lens 130 can be configured as a laterally placed frustum, a central symmetry axis of the frustum coincides with a central symmetry axis of the main body portion, and the smallest cross-section of the frustum is the same size as and fully engaged with the cross-section of the column of the main body portion. Further, for example, the reflective lens portion 160 may be fixed in front of the diffuse lens portion 150 of the light guiding lens 130 and is fully engaged with the diffuse lens portion 150. For example, the reflective lens portion 160 may be configured together with the diffuse lens portion 150 as the light guiding lens 130 having an expanded flare shape.

As shown in FIG. 1, viewed from a lateral direction, an inclined inner periphery of the reflective lens portion 160 further includes a reflective surface, which can reflect the uniformly mixed-color lights 154 to a larger range.

Additionally or alternatively, the reflective surfaces around the sides of the reflective lens portion 160 may include a light reflective coating. For example, the light reflective coating may be a metal film formed on an inner peripheral surface of the reflective lens portion, which can reflect a large amount of light, thereby improving the brightness and focusing effect of the light source. For example, the light reflective coating can be at least one metal layer applied to the surface around the inner side of the reflective lens portion, such as a coating of reflective material such as aluminum plating or copper plating, so that the reflective surface around the inner side of the reflective lens portion 160 can reflect light, make the light more focused, and improve the brightness and imaging effect of the LED light, especially when the speaker equipped with such lighting effects is used in a scene with dim brightness and in a scene where the surrounding environment is not easily noticeable.

Further, the inner periphery or inner sidewall of the reflective lens portion 160 may further include light reflective structures, and the light reflective structures may be configured to reflect the mixed-color light 154 in multiple directions. For example, the light reflective structures 162 of the reflective surface around the inner side of the reflective lens portion 160 may include tiny curved surface structures formed thereon, as shown in FIG. 1. Moreover, the light reflective structures 162 around the inner side of the reflective lens portion 160 may also include other tiny concave-convex structures. For example, these light reflective structures 162 may be regular or irregular, so as to divergently reflect the uniformly mixed-color lights 154 in more directions to a larger range. Such light spots that can diverge to a larger range can display light shows in a more subtle ambient mode without being limited by the resulting light spots being too small due to the lens size, so that the uniformly mixed-color lights 154 can at least partially pass through the gaps in the front grille panel of the speaker, generating a star-sparkling imaging effect 170, allowing users to enjoy a clearer and more consistent color star-sparkling lighting effect.

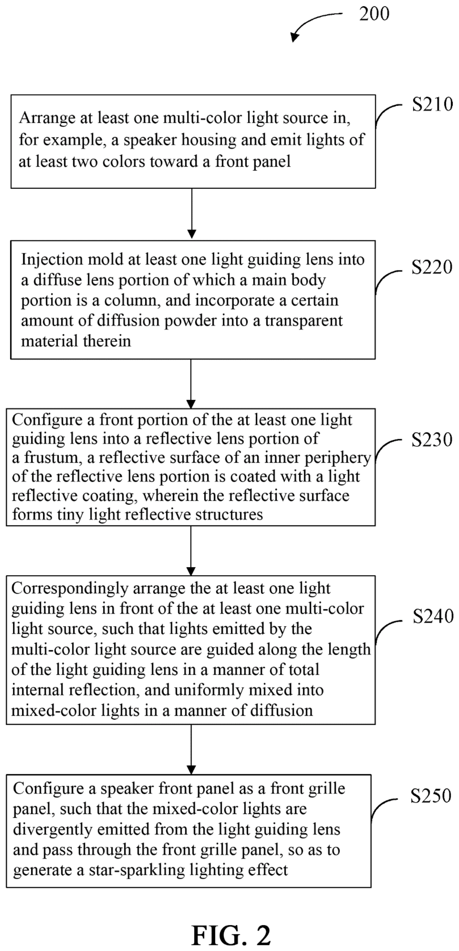

FIG. 2 shows a schematic flowchart 200 of a method for generating a star-sparkling lighting effect according to one or more embodiments of the present disclosure. The method for generating a star-sparkling lighting effect includes the following steps.

In step S210, at least one multi-color light source is arranged in, for example, a speaker housing and lights of at least two colors are emitted toward a front panel. Taking an RGB LED light source as an example, for example, the RGB LED light source may be provided on a PCB inside the speaker housing and powered by a power supply to emit lights. The RGB LED light source may emit multiple lights, for example, the RGB LED light source may emit lights including red, green, and/or blue lights.

In step S220, a main body portion of a light guiding lens is configured as an elongated column, so that lights can be guided in a manner of total internal reflection and travel within the light guiding lens along the length of the elongated column. The column portion of the light guiding lens may include a diffuse lens portion. While injection molding the diffuse lens portion, a certain amount of diffusion powder may also be incorporated into its transparent material. The size, shape, distribution, etc. of particles of the diffusion powder can be precisely adjusted and controlled through advanced production processes, and properties of the diffusion powder and the diffuse lens portion can be adjusted as needed, thereby adjusting the scattering angle of lights in the diffuse lens portion, the color of the scattered light, the scattering efficiency, etc., to meet personalized needs for lighting effects. Therefore, the lights can be more uniformly mixed into mixed-color lights after reacting with the diffusion powder in the diffuse lens portion, and is guided along the diffuse lens portion into a front portion of the light guiding lens.

In step S230, the front portion of the light guiding lens may be configured such that its cross-sectional diameter gradually increases along the length direction of the light guiding lens, thereby forming an expanded flare shape, so that the mixed lights can be emitted divergently from the flare to a larger range, thereby obtaining a lighting effect over a larger area.

Additionally or alternatively, the front portion can be configured as a reflective lens portion, and the reflective lens portion is shaped as, for example, a laterally placed frustum, the smallest cross-section of the frustum is consistent with and fully engaged with the cross-section of the elongated column of the main body portion of the light guiding lens, such that the frustum is fixed in front of the main body portion. A reflective surface may be provided around an inner side of the reflective lens portion. For example, a metal film may be formed on a surface around the inner side of the reflective lens portion, or a light reflective coating such as aluminum plating or copper plating may be applied, so that the mixed-color lights within the reflective lens portion can be reflected to a larger range by the light reflective coating.

Further, the inner periphery or inner sidewall of the reflective lens portion at the front portion of the light guiding lens may be configured to have regular or irregular light reflective structures, so as to reflect the mixed-color lights in multiple directions. For example, tiny curved surface structures may be formed around the inner side of the reflective lens portion. Moreover, the light reflective structures may also include other tiny concave-convex structures, so as to divergently reflect the mixed-color lights in more directions to a larger range.

Next, in step S240, at least one light guiding lens can be arranged in a star-sparkling lighting member, and in conjunction with the design and manufacture of at least one multi-color light source, the at least one light guiding lens configured in the previous steps can be correspondingly placed in front of the at least one multi-color light source. For example, when an RGB LED light source is used to emit red, green and/or blue lights, these lights can enter one end of the light guiding lens and be guided along the length of the light guiding lens in a manner of total internal reflection, and further uniformly mixed into mixed-color lights in a manner of diffusion.

Finally, in step S250, the front panel of the speaker can be provided as a front grille panel with gaps, and the mixed-color lights uniformly mixed in the diffuse lens portion can be reflected divergently in multiple directions toward the front grille panel through the reflective lens portion. Therefore, the mixed-color lights can form larger light spots and pass through the gaps in the front grille panel, generating a star-sparkling lighting effect.

According to the method for generating a star-sparkling lighting effect provided by the present disclosure, through the above steps, the lights emitted by the multi-color light source can be guided in a manner of total internal reflection via the light guiding lens, and at the same time, the multi-color lights are first scattered and diffused with the diffusion powder in the diffuse lens portion and uniformly mixed into mixed-color lights, and then the mixed-color lights are divergently reflected to the front grille panel of the front panel of the speaker in the reflective lens portion, so that a user can see a uniform, aesthetically pleasing and colorful star-sparkling lighting effect with a larger light spot range through the front grille panel of the speaker.

The method and device for generating a star-sparkling lighting effect provided by the present disclosure can mix the red, green, and/or blue lights emitted by the RGB LED light source in a very uniform manner. In this way, the uniformly mixed-color visible lights will not produce an excessive central brightness of the LED, so the user avoid the risk of eye damage during viewing. The method and device for generating a star-sparkling lighting effect provided by the present disclosure can display a light show in a subtle ambient mode that is not easily noticed. With the help of the light reflective coating arranged in the light guiding lens, the mixed-color lights can produce larger-range light spots or light patches, and the light spots produced in this way can even be larger than the size of the lens. Because the large light spots produced in this way is larger and easier to see, fewer light sources can be used in the entire system to produce a star-sparkling visual effect, thus making the imaging effect more economical and cost-effective.

Examples of one or more implementations of the present inventive subject matter are described in the following clauses:
Clause 1. One or more embodiments of the present disclosure provide a device for generating a star-sparkling lighting effect, the device comprises:
   at least one multi-color light source arranged to emit multiple lights, wherein the multiple lights include lights of at least two colors;
   at least one light guiding lens arranged in front of the at least one multi-color light source, such that the multiple lights enter the at least one light guiding lens,
   wherein a main body portion of the at least one light guiding lens is configured as a column, and the multiple lights are guided through the at least one light guiding lens in a manner of total internal reflection;
   wherein the multiple lights are mixed into mixed-color lights; and
   wherein a front portion of the at least one light guiding lens is configured as a frustum of an enlarged flare shape, so as to divergently emit the mixed-color lights.
Clause 2. The device of clause 1, wherein the main body portion comprises a diffuse lens portion configured to diffuse the multiple lights, so as to uniformly mix the lights into the mixed-color lights.
Clause 3. The device of clause 1 or clause 2, wherein the diffuse lens portion is injection molded with a certain amount of diffusion powder incorporated into a transparent material inside the diffuse lens portion.
Clause 4. The device of any one of clause 1 to clause 3, wherein the front portion comprises a reflective lens portion, the reflective lens portion being fixed in front of the main body portion and fully engaged with the main body portion.
Clause 5. The device of any one of clause 1 to clause 4, wherein an inner periphery of the reflective lens portion comprises a reflective surface, and wherein the reflective surface is coated with a light reflective coating to reflect the mixed-color lights to a larger range.
Clause 6. The device of any one of clause 1 to clause 5, wherein the reflective surface comprises light reflective structures, and wherein the light reflective structures comprise tiny curved surface structures, so as to divergently reflect the mixed-color lights in more directions to a larger range.
Clause 7. The device of any one of clause 1 to clause 6, further comprising a front grille panel arranged in front of the at least one light guiding lens, such that the emitted mixed-color lights pass through gaps in the front grille panel.
Clause 8. One or more embodiments of the present disclosure provide a method for generating a star-sparkling lighting effect, the method comprises the following steps:
   arranging at least one multi-color light source to emit multiple lights, wherein the multiple lights include lights of at least two colors;
   arranging at least one light guiding lens in front of the at least one multi-color light source, such that the multiple lights enter the at least one light guiding lens,
   wherein the method further comprising:
      configuring a main body portion of the at least one light guiding lens as a column, to guide the multiple lights through the at least one light guiding lens in a manner of total internal reflection;
      mixing the multiple lights into mixed-color lights; and
      configuring a front portion of the at least one light guiding lens as a frustum of an enlarged flare shape, so as to divergently emit the mixed-color lights.
Clause 9. The method of clause 8, wherein the main body portion comprises a diffuse lens portion, and the method further comprises configuring the diffuse lens portion to diffuse the multiple lights, so as to uniformly mix the lights into the mixed-color lights.
Clause 10. The method of clause 8 or clause 9, further comprising: during injection molding of the diffuse lens portion, incorporating a certain amount of diffusion powder into a transparent material inside the diffuse lens portion.
Clause 11. The method of any one of clause 8 to clause 10, wherein the front portion comprises a reflective lens portion, and the method further comprises fixing the reflective lens portion in front of the main body portion so as to be fully engaged with the main body portion.
Clause 12. The method of any one of clause 8 to clause 11, further comprising applying a light reflective coating on a reflective surface of an inner periphery of the reflective lens portion, so as to reflect the mixed-color lights to a larger range.
Clause 13. The method of any one of clause 8 to clause 12, wherein the reflective surface comprises light reflective structures, and wherein the light reflective structures comprise tiny curved surface structures, so as to divergently reflect the mixed-color lights in more directions to a larger range.
Clause 14. The method of any one of clause 8 to clause 13, further comprising arranging a front grille panel in front of the at least one light guiding lens, such that the mixed-color lights pass through gaps in the front grille panel.

The selection of terms used herein is intended to best explain the principles and practical applications of the embodiments or the improvements to technologies found in the market, or to enable other persons of ordinary skills in the art to understand the embodiments disclosed herein.

In the above, reference is made to the embodiments presented in the present disclosure. However, the scope of the present disclosure is not limited to the specifically described embodiments. On the contrary, any combination of the above features and elements, whether involving different embodiments or not, is contemplated to implement and practice the contemplated embodiments.

Moreover, although the embodiments disclosed herein may achieve advantages over other possible solutions or over the prior art, whether or not a given embodiment achieves a particular advantage does not limit the scope of the present disclosure. Therefore, the above aspects, features, embodiments, and advantages are merely illustrative and are not considered as elements or limitations of the appended claims, unless otherwise expressly recited in the claims.

Although the above content is directed at the embodiments of the present disclosure, other and further embodiments of the present disclosure may be devised without departing from the basic scope of the present disclosure, and the scope of the present disclosure is determined by the appended claims.

## Claims

1. A device for generating a star-sparkling lighting effect, comprising:
at least one multi-color light source arranged to emit multiple lights, wherein the multiple lights include lights of at least two colors;
at least one light guiding lens arranged in front of the at least one multi-color light source, such that the multiple lights enter the at least one light guiding lens,
wherein a main body portion of the at least one light guiding lens is configured as a column, and the multiple lights are guided through the at least one light guiding lens in a manner of total internal reflection;
wherein the multiple lights are mixed into mixed-color lights; and
wherein a front portion of the at least one light guiding lens is configured as a frustum of an enlarged flare shape, so as to divergently emit the mixed-color lights.

2. The device of claim 1, wherein the main body portion comprises a diffuse lens portion configured to diffuse the multiple lights, so as to uniformly mix the lights into the mixed-color lights.

3. The device of claim 2, wherein the diffuse lens portion is injection molded with a certain amount of diffusion powder incorporated into a transparent material inside the diffuse lens portion.

4. The device of any preceding claim, wherein the front portion comprises a reflective lens portion, the reflective lens portion being fixed in front of the main body portion and fully engaged with the main body portion.

5. The device of claim 4, wherein an inner periphery of the reflective lens portion comprises a reflective surface, and wherein the reflective surface is coated with a light reflective coating to reflect the mixed-color lights to a larger range.

6. The device of claim 5, wherein the reflective surface comprises light reflective structures, and wherein the light reflective structures comprise tiny curved surface structures, so as to divergently reflect the mixed-color lights in more directions to a larger range.

7. The device of any preceding claim, further comprising a front grille panel arranged in front of the at least one light guiding lens, such that the emitted mixed-color lights pass through gaps in the front grille panel.

8. A method for generating a star-sparkling lighting effect, comprising the following steps:
arranging at least one multi-color light source to emit multiple lights, wherein the multiple lights include lights of at least two colors;
arranging at least one light guiding lens in front of the at least one multi-color light source, such that the multiple lights enter the at least one light guiding lens,
wherein the method further comprising:
configuring a main body portion of the at least one light guiding lens as a column, to guide the multiple lights through the at least one light guiding lens in a manner of total internal reflection;
mixing the multiple lights into mixed-color lights; and
configuring a front portion of the at least one light guiding lens as a frustum of an enlarged flare shape, so as to divergently emit the mixed-color lights.

9. The method of claim 8, wherein the main body portion comprises a diffuse lens portion, and the method further comprises configuring the diffuse lens portion to diffuse the multiple lights, so as to uniformly mix the lights into the mixed-color lights.

10. The method of claim 9, further comprising: during injection molding of the diffuse lens portion, incorporating a certain amount of diffusion powder into a transparent material inside the diffuse lens portion.

11. The method of any of claims 8 to 10, wherein the front portion comprises a reflective lens portion, and the method further comprises fixing the reflective lens portion in front of the main body portion so as to be fully engaged with the main body portion.

12. The method of claim 11, further comprising applying a light reflective coating on a reflective surface of an inner periphery of the reflective lens portion, so as to reflect the mixed-color lights to a larger range.

13. The method of claim 12, wherein the reflective surface comprises light reflective structures, and wherein the light reflective structures comprise tiny curved surface structures, so as to divergently reflect the mixed-color lights in more directions to a larger range.

14. The method of any of claims 8 to 13, further comprising arranging a front grille panel in front of the at least one light guiding lens, such that the mixed-color lights pass through gaps in the front grille panel.
